# EUROPEAN PATENT SPECIFICATION

(11) **EP 3 894 133 B1**
(45) Date of publication and mention of the grant of the patent: **26.10.2022**
(21) Application number: 19728734.5
(22) Date of filing: 29.04.2019
(51) Int. Cl.: B23Q 3/12, B24B 23/02, B24B 45/00, B26D 7/26, B27B 5/32

(54) **AN ELECTROSPINDLE**
ELEKTROSPINDEL
ÉLECTRO-BROCHE

(30) Priority: 23.01.2019 IT 201900001029
(43) Date of publication of application: 20.10.2021
(73) Proprietor: SACCARDO GCF S.R.L., 36015 Schio (VI) (IT)
(72) Inventor: SACCARDO, Francesca, 36014 Santorso (VI) (IT)
(74) Representative: Trentin, Michele
(86) International application number: PCT/IB2019/053481
(87) International publication number: WO 2020/152512

(56) References cited:
- EP-A1- 2 065 126
- DE-A1- 3 613 987
- DE-U1-202008 009 208
- US-A- 6 042 461

## Description

### Field of application

The present invention is applicable to the field of industrial machining operations and, in particular, concerns machine tools.

More in detail, the present invention relates to an electrospindle for industrial machining operations.

### Background art

It is known that material machining operations in the industrial field now take place almost exclusively by electric tools. Operations such as cutting, bending, milling, drilling or other, in fact, typically take place by means of special machines equipped with the appropriate tools to perform the machining.

Among these machines, there are numerous cases in which they comprise electrospindles, i.e. mechanical devices, installed on the machine tool, on which a self-centering device can be mounted which allows a tool to be dragged in rotation in order to be able to perform a certain type of machining with it.

This tool is typically held in position by the head of the electrospindle. The latter is associated with the free end of the motor shaft and comprises two flanges which hold the tool necessary for machining between them. More in detail, a first flange is pushed against a counterflange, integral with the motor shaft, by a nut screwed to the free end of the motor shaft.

Moreover, in some variants, the free end of the motor shaft also has a threaded blind hole which extends along the longitudinal development axis of the shaft and which receives, by screwing, a second tool.

EP 2 065 126 A1 discloses an electrospindle according to the preamble of claim 1.

This configuration, although useful and functional, has some drawbacks.

It is in fact known that the motors have their own sense of rotation (right-handed or left-handed) which could also be reversed to speed up the machining operations. However, the threads of the nut and the free end of the motor shaft, as well as those of the blind hole and of the additional tool, must be in accordance with these rotation directions in order to avoid unwanted unscrewing. All this results in the presence of different motor shafts, that is, one for each rotation combination of the motor and tools. The user who wants to be able to use any of these combinations should therefore have different motor shafts and replace them with one another according to the machining need.

Moreover, in any case, the reversal of the motor rotation direction is not allowed except by replacing the shaft.

### Presentation of the invention

The object of the present invention is to overcome at least partially the drawbacks described above by providingan electrospindle in which it is not necessary to replace the motor shaft to be able to invert the rotation direction of the motor itself.

In particular, an object of the present invention is to provide an electrospindle in which the possible combinations between the rotation direction of the motor and the attachment of the tools does not require the use of different motor shafts.

These objects, as well as others which will be better understood below, are achieved by an electrospindle according to one or more of the following claims, which are an integral part of the present invention.

In particular, it comprises a motor for moving a tool and a mechanical transmission for transmitting motion from the motor to the tool.

The electrospindle is also provided with a gripping head for the tool and for coupling the latter with the mechanical transmission, this head in turn comprising two flanges between which a portion of the tool can be interposed. In particular, a first flange is pushed against a counterflange by at least one thrust nut so as to hold the tool in position.

According to an aspect of the invention, the transmission has a threaded free end so as to receive the thrust nut by screwing. The thread is double comprising a first right-handed thread and a second left-handed thread.

Advantageously, therefore, the reversal of the rotation direction of the motor does not require the changing of the motor shaft. It is in fact sufficient to use a nut with the opposite thread.

According to another aspect of the invention, moreover, the electrospindle comprises a first nut with a thread suitable for coupling with the first thread (the right-handed one) and a second nut with a thread suitable for coupling with the second thread (the left-handed one).

Advantageously, therefore, the reversal of the rotation direction of the motor does not even require the replacement of the thrust nut. In fact, for each rotation direction, one of the two nuts makes the seal.

Still advantageously, the rotation direction can be inverted at any instant even during machining, thereby allowing to speed up the work of the electric tool and consequently reduce the production or machining costs.

### Brief description of the drawings

Further features and advantages of the invention will be more evident in light of the detailed description of some of the preferred but not exclusive embodiments of an electrospindle according to the invention, illustrated by way of non-limiting example with the aid of the accompanying drawing tables, wherein:

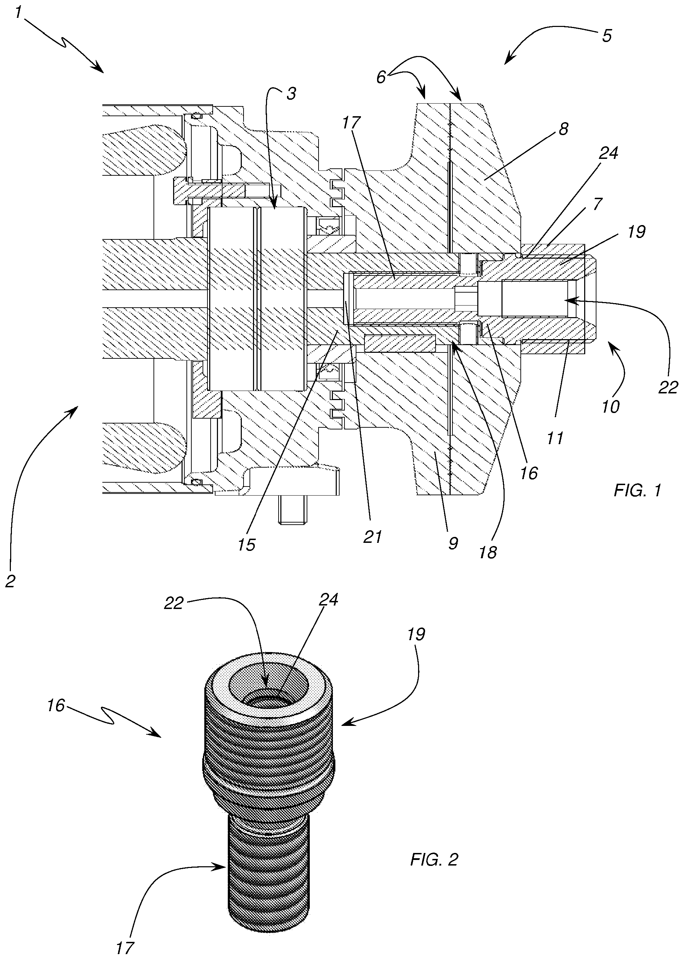

FIG. 1 represents a portion of an electrospindle according to the invention in a sectional view;
FIG. 2 represents a detail of an electrospindle according to the invention in a perspective view.

### Detailed description of some preferred exemplary embodiments

With reference to the mentioned figures, described herein is an electrospindle **1** commonly used for machining operations such as cutting, milling, drilling or other.

By definition, an electrospindle **1** comprises a motor **2** for moving a tool, not represented in the figures, and a mechanical transmission **3** for transmitting motion from the motor **2** to the tool.

The power of the motor **2** is typically adequate for the use to which the electrospindle **1** is directed and, consequently, also the embodiment of the mechanical transmission **3** is consequent to the efforts that it must bear.

According to an aspect of the invention, the electrospindle **1** comprises a gripping head **5** of the tool. Moreover, this head **5** not only retains the tool, but realizes the coupling between the latter and the mechanical transmission **3.**

In particular, the head **5** comprises two flanges **6** between which a portion of the tool can be interposed. There is also a thrust nut **7** which has the function of pushing a first flange **8** towards the counterflange **9** so as to hold the tool between them.

More in detail, the mechanical transmission **3** has a free end **10** threaded so as to receive the thrust nut **7** by screwing.

According to another aspect of the invention, the thread **11** of the free end**10** of the transmission **3** is double comprising a first right-handed thread and a second left-handed thread.

Advantageously, therefore, on the same free end **10** both right-handed and left-handed thrust nuts **7** can be screwed. In other words, the mechanical transmission **3** can be used indifferently with right-handed or left-handed tools.

In other words, advantageously, changing the rotation direction of the motor **2** to perform a machining operation does not require the replacement of the mechanical transmission **3** or of a part thereof.

However, this still advantageously limits the number of components to be provided in the production of the electrospindle **1** of the invention.

In order to ensure the tightness of the thrust nut **7,** according to an embodiment variant not shown in the figures, the electrospindle comprises two thrust nuts: a first nut with a thread suitable for coupling with the first thread, and a second nut with a thread suitable for coupling with the second thread.

In this way, advantageously, whatever the direction of rotation imposed by the motor, the tool is correctly held in position since at least one of the first and second nuts will not be urged to unscrew.

Still advantageously, the same tool can be used with both rotation directions, thus speeding up machining and reducing machine downtime.

According to one aspect of the embodiment variant which is described, the first nut and the second nut comprise mutual coupling means, but this detail must not be considered limiting for further different embodiment variants. These coupling means, however, allow a better management of the nuts since, being one connected to the other, it is impossible for them to accidentally unscrew by repeatedly reversing the rotation directions during machining.

According to another aspect of the invention, the mechanical transmission **3** comprises a motor shaft **15** having a first end, not shown in the figures, operatively coupled to the engine **2,** and an insert **16** having a first side **17** coupled by screwing to the second end **18** of the motor shaft **15.** Moreover, the second side **19** of the insert **16** constitutes the free end **10** of the transmission **3.**

In this case, the counterflange **9** of the head **5** is integral with the motor shaft **15,** while the thrust nut **7** is coupled to the insert **16.**

Advantageously, therefore, the second end **18** of the motor shaft **15** is no longer protruding from the head **5,** as instead occurs in the known art, but the insert **16** is protruding. Still advantageously, therefore, the motor shaft **16,** whose operation is delicate and therefore expensive, is more protected from unwanted damage.

Since the thrust nut **7** is screwed onto the insert **16,** in substance, still advantageously, the latter functionally replaces the motor shaft **15,** cooperating in retaining the tool.

Still advantageously, in the event of damage or deterioration, the replacement of the insert **16** is easier and less expensive than the replacement of the motor shaft **15** not only in terms of time for performing such a replacement and of downtime, but also in terms of materials used to make such piece.

Still advantageously, in fact, the insert **16** can be made of the most suitable material for its exposed positioning. In particular, it can be made with a less expensive material than the motor shaft **15** and suitably hardened.

Its coupling by screwing to the motor shaft **15** also allows to obtain an advantageously stable but low-cost coupling.

More in detail, the first side **17** of the insert **16** is threaded, while the second end **18** of the motor shaft **15** comprises a first hole **21** typically but not necessarily blind which extends along the longitudinal development axis of the motor shaft **15** and which is counter-shaped on the first side **17** of the insert **16.** Moreover, this first hole **21** is threaded to receive said first side **17** of the insert **16** by screwing.

However, this embodiment should not be considered as limiting for the invention. According to an embodiment variant, in fact, the transmission comprises only the motor shaft and not the insert, the second end of the motor shaft constituting the free end of the transmission.

According to another aspect of the invention, the second side **19** of the insert **16** also comprises a second hole **22** which is also typically but not necessarily blind, which extends along the longitudinal development axis of the insert **16** itself to receive and retain an additional tool.

This second hole **22** is typically threaded to retain the additional tool by screwing. In the industry jargon, the second tool connection which was just mentioned is referred to as "half throttle".

According to a further aspect of the invention, also the thread **24** of the second hole **22** is double comprising a third right-handed thread and a fourth left-hand thread so as to be able to screw both right-handed and left-handed additional tools.

Advantageously, therefore, the double thread **24** of the second hole **22** makes it possible to reduce even more the reasons for replacing the insert **16** or, in the case of the above-described embodiment variant, of the entire motor shaft.

In light of the above, it is therefore understood that the electrospindle of the invention overcomes the drawbacks noted in the prior art.

In particular, it makes it possible to invert the rotation direction of the motor to perform a machining operation without it being necessary to replace the motor shaft.

On closer inspection, the different possible combinations between the rotation direction of the motor and fixing of the tools does not require the use of different motor shafts with the electrospindle of the invention.

Although the invention has been described with particular reference to the accompanying figures, the reference numerals used in the description and claims are used to improve the intelligence of the invention and do not constitute any limitation to the claimed scope of protection.

## Claims

1. An electrospindle comprising a motor **(2)** for moving a tool and a mechanical transmission **(3)** for transmitting the motion from said motor **(2)** to the tool, said electrospindle **(1)** comprising a gripping head **(5)** of the tool and for coupling the latter to said mechanical transmission **(3),** said head **(5)** comprising at least two flanges **(6)** between which is gripped a portion of the tool, a first flange **(8)** of said two flanges **(6)** being pushed against a counterflange **(9)** of said two flanges **(6)** by at least one thrust nut **(7)** so as to hold the tool in position, wherein said transmission **(3)** has a free end **(10)** threaded so as to receive said at least one thrust nut **(7)** by screwing, said electrospindle being **characterized by** said thread **(11)** of said free end **(10)** of said transmission **(3)** being double and comprising a first right-handed thread and a second left-handed thread.

2. Electrospindle according to claim 1, **characterized in that** said at least one thrust nut comprises a first nut with a thread suitable for coupling with said first thread of said free end of said transmission and a second nut with a thread suitable for coupling with said second thread of said free end of said transmission.

3. Electrospindle according to claim 2, **characterized in that** said first nut and second nut comprise mutual coupling means.

4. Electrospindle according to any one of the preceding claims, **characterized in that** said transmission comprises a motor shaft having a first end operatively coupled to said motor and a second end constituting said free end of said transmission.

5. Electrospindle according to any one of claims 1 to 3, **characterized in that** said transmission **(3)** comprises:
- a motor shaft **(15)** having a first end operatively coupled to said motor **(2);**
- an insert **(16)** coupled from a first side **(17)** by screwing to a second end **(18)** of said motor shaft **(15),** a second side **(19)** of said insert **(16)** constituting said free end **(10)** of said mechanical transmission **(3).**

6. Electrospindle according to claim 5, **characterized in that** said first side **(17)** of said insert **(16)** is threaded and said second end **(18)** of said motor shaft **(15)** comprises a first hole **(21)** which develops according to the longitudinal development axis of said motor shaft **(15),** said first hole **(21)** being shaped on said first side **(17)** of said insert **(16)** and being threaded to receive said first side **(17)** of said insert **(16)** by screwing.

7. Electrospindle according to claim 5 or 6, **characterized in that** said second side **(19)** of said insert **(16)** comprises a second hole **(22)** which extends along the longitudinal development axis of said insert **(16)** to receive and hold an additional tool.

8. Electrospindle according to claim 7, **characterized in that** said second hole (22) is threaded to retain the additional tool by screwing.

9. Electrospindle according to claim 8, **characterized in that** said threading of said second hole **(22)** is double comprising a third right-handed thread and a fourth left-handed thread.

## Patentansprüche

1. Elektrospindel, umfassend einen Motor (2) zum Bewegen eines Werkzeugs und ein mechanisches Getriebe (3) zum Übertragen der Bewegung von dem Motor (2) auf das Werkzeug, wobei die Elektrospindel (1) einen Einspannkopf (5) des Werkzeugs zum Koppeln des Letzteren mit dem mechanischen Getriebe (3) umfasst, wobei der Kopf (5) mindestens zwei Flansche (6) umfasst, zwischen denen ein Teil des Werkzeugs eingespannt ist, und ein erster Flansch (8) der zwei Flansche (6) durch mindestens eine Druckmutter (7) gegen einen Gegenflansch (9) der zwei Flansche (6) gedrückt wird, um das Werkzeug in Position zu halten, wobei das Getriebe (3) ein mit einem Gewinde versehenes freies Ende (10) aufweist, sodass es die mindestens eine Druckmutter (7) durch Verschrauben aufnimmt, und die Elektrospindel **dadurch gekennzeichnet ist, dass** das Gewinde (11) des freien Endes (10) des Getriebes (3) doppelt ist und ein erstes Rechtsgewinde und ein zweites Linksgewinde umfasst.

2. Elektrospindel nach Anspruch 1, **dadurch gekennzeichnet, dass** die mindestens eine Druckmutter eine erste Mutter mit einem Gewinde umfasst, das zum Koppeln mit dem ersten Gewinde des freien Endes des Getriebes geeignet ist, und eine zweite Mutter mit einem Gewinde, das zum Koppeln mit dem zweiten Gewinde des freien Endes des Getriebes geeignet ist.

3. Elektrospindel nach Anspruch 2, **dadurch gekennzeichnet, dass** die erste Mutter und die zweite Mutter Mittel gegenseitige Kopplungsmittel umfassen.

4. Elektrospindel nach einem der vorstehenden Ansprüche, **dadurch gekennzeichnet, dass** das Getriebe eine Motorwelle mit einem ersten Ende, das mit dem Motor betriebsfähig gekoppelt ist, und ein zweites Ende umfasst, welches das freie Ende des Getriebes bildet.

5. Elektrospindel nach einem der Ansprüche 1 bis 3, **dadurch gekennzeichnet, dass** das Getriebe (3) umfasst:
- eine Motorwelle (15) mit einem ersten Ende, das betriebsfähig mit dem Motor (2) gekoppelt ist;
- einen Einsatz (16), der von einer ersten Seite (17) aus durch Verschrauben mit einem zweiten Ende (18) der Motorwelle (15) gekoppelt ist, wobei eine zweite Seite (19) des Einsatzes (16) das freie Ende (10) des mechanischen Getriebes (3) bildet.

6. Elektrospindel nach Anspruch 5, **dadurch gekennzeichnet, dass** die erste Seite (17) des Einsatzes (16) mit einem Gewinde versehen ist und das zweite Ende (18) der Motorwelle (15) ein erstes Loch (21) umfasst, das sich entsprechend der Längsentwicklungsachse der Motorwelle (15) entwickelt, wobei das erste Loch (21) auf der ersten Seite (17) des Einsatzes (16) geformt und mit einem Gewinde versehen ist, um die erste Seite (17) des Einsatzes (16) durch Verschrauben aufzunehmen.

7. Elektrospindel nach Anspruch 5 oder 6, **dadurch gekennzeichnet, dass** die zweite Seite (19) des Einsatzes (16) ein zweites Loch (22) umfasst, das sich entlang der Längsentwicklungsachse des Einsatzes (16) erstreckt, um ein zusätzliches Werkzeug aufzunehmen und zu halten.

8. Elektrospindel nach Anspruch 7, **dadurch gekennzeichnet, dass** das zweite Loch (22) mit einem Gewinde versehen ist, um das zusätzliche Werkzeug durch Verschrauben zu halten.

9. Elektrospindel nach Anspruch 8, **dadurch gekennzeichnet, dass** das Gewinde des zweiten Lochs (22) doppelt ist und ein drittes Rechtsgewinde und ein viertes Linksgewinde umfasst.

## Revendications

1. Électro-broche comprenant un moteur **(2)** destiné à déplacer un outil et une transmission mécanique **(3)** destinée à transmettre le mouvement dudit moteur **(2)** à l'outil, ladite électro-broche **(1)** comprenant une tête de préhension **(5)** de l'outil et étant destinée à coupler ce dernier à ladite transmission mécanique **(3),** ladite tête **(5)** comprenant au moins deux brides **(6)** entre lesquelles une portion de l'outil est agrippée, une première bride **(8)** desdites deux brides **(6)** étant poussée contre une contre-bride **(9)** desdites deux brides **(6)** par au moins une bague-écrou **(7)** de manière à maintenir l'outil en position, dans laquelle ladite transmission **(3)** présente une extrémité libre **(10)** filetée de manière à recevoir ladite au moins une bague-écrou **(7)** par vissage, ladite électro-broche étant **caractérisée par** ledit filetage **(11)** de ladite extrémité libre **(10)** de ladite transmission (3) étant double et comprenant un premier filetage droit et un deuxième filetage gauche.

2. Électro-broche selon la revendication 1, **caractérisée en ce que** ladite au moins une bague-écrou comprend un premier écrou avec un filetage adapté pour se coupler avec ledit premier filetage de ladite extrémité libre de ladite transmission et un second écrou avec un filetage adapté pour se coupler avec ledit deuxième filetage de ladite extrémité libre de ladite transmission.

3. Électro-broche selon la revendication 2, **caractérisée en ce que** lesdits premier écrou et second écrou comprennent des moyens de couplage réciproques.

4. Électro-broche selon l'une quelconque des revendications précédentes, **caractérisée en ce que** ladite transmission comprend un arbre de moteur présentant une première extrémité couplée de manière fonctionnelle audit moteur et une seconde extrémité constituant ladite extrémité libre de ladite transmission.

5. Électro-broche selon l'une quelconque des revendications 1 à 3, **caractérisée en ce que** ladite transmission **(3)** comprend :
- un arbre de moteur **(15)** présentant une première extrémité couplée de manière fonctionnelle audit moteur **(2)** ;
- un insert **(16)** couplé depuis un premier côté **(17)** par vissage à une seconde extrémité **(18)** dudit arbre de moteur **(15),** un second côté **(19)** dudit insert **(16)** constituant ladite extrémité libre **(10)** de ladite transmission mécanique **(3).**

6. Électro-broche selon la revendication 5, **caractérisée en ce que** ledit premier côté **(17)** dudit insert **(16)** est fileté et ladite seconde extrémité **(18)** dudit arbre de moteur **(15)** comprend un premier trou **(21)** qui se développe selon l'axe de développement longitudinal dudit arbre de moteur **(15),** ledit premier trou **(21)** étant façonné sur ledit premier côté **(17)** dudit insert **(16)** et étant fileté pour recevoir ledit premier côté **(17)** dudit insert **(16)** par vissage.

7. Électro-broche selon la revendication 5 ou 6, **caractérisée en ce que** ledit second côté **(19)** dudit insert **(16)** comprend un second trou **(22)** qui s'étend le long de l'axe de développement longitudinal dudit insert **(16)** pour recevoir et maintenir un outil supplémentaire.

8. Électro-broche selon la revendication 7, **caractérisée en ce que** ledit second trou **(22)** est fileté pour retenir l'outil supplémentaire par vissage.

9. Électro-broche selon la revendication 8, **caractérisée en ce que** ledit filetage dudit second trou **(22)** est double comprenant un troisième filetage droit et un quatrième filetage gauche.
